# EUROPÄISCHE PATENTSCHRIFT

(11) **EP 3 353 431 B1**
(45) Veröffentlichungstag und Bekanntmachung des Hinweises auf die Patenterteilung: **06.05.2020**
(21) Anmeldenummer: 17709613.8
(22) Anmeldetag: 01.03.2017
(51) Int. Cl.: F16C 1/14, B60J 7/057, F16C 1/20

(54) **STEIGUNGSKABEL MIT EINEM MITNEHMER UND VERFAHREN ZUR HERSTELLUNG EINES STEIGUNGSKABELS MIT EINEM MITNEHMER**
FLEXIBLE SHAFT WITH A CATCH AND METHOD FOR PRODUCING A FLEXIBLE SHAFT WITH A CATCH
CÂBLE HÉLICOÏDAL POURVU D'UN ÉLÉMENT D'ENTRAÎNEMENT ET SON PROCÉDÉ DE FABRICATION

(30) Priorität: 16.03.2016 DE 102016104918
(43) Veröffentlichungstag der Anmeldung: 01.08.2018
(60) Teilanmeldung: 19172315.4
(73) Patentinhaber: Küster Holding GmbH, 35630 Ehringshausen (DE)
(72) Erfinder: SCHERLE, Artur, 35581 Wetzlar - Münchholzhausen (DE); REINHARDT, Günter, 34614 Wehrdorf (DE); ECKHARDT, Markus, 35756 Mittenaar - Offenbach (DE)
(74) Vertreter: Müller, Eckhard
(86) Internationale Anmeldenummer: PCT/EP2017/054690
(87) Internationale Veröffentlichungsnummer: WO 2017/157655

(56) Entgegenhaltungen:
- WO-A1-2012/084082
- DE-A1- 3 015 965
- DE-A1-102008 005 983
- DE-A1-102012 110 257
- DE-U- 7 306 032
- FR-A1- 2 482 905
- US-A- 3 444 701
- US-A- 4 570 893

## Beschreibung

Die Erfindung betrifft ein Steigungskabel mit einem an einem Abschnitt des Steigungskabels, insbesondere an einem Ende des Steigungskabels, befestigten Mitnehmer zur Kraftübertragung, beispielsweise auf Schiebedächer oder Laderaumabdeckungen.

Zudem betrifft die Erfindung ein Verfahren zur Herstellung eines Steigungskabels, insbesondere für die Betätigung von Schiebedächern oder Laderaumabdeckungen von Fahrzeugen, an dem an einem Abschnitt des Steigungskabels, insbesondere seinem einen Ende ein Mitnehmer zur Kraftübertragung, beispielsweise auf Schiebedächern oder Laderaumabdeckungen von Fahrzeugen, befestigt sind.

Steigungskabel der eingangs genannten Art, welche auch als Antriebskabel oder Flex-Welle bekannt sind, werden bevorzugt bei Hebe- und/oder Schiebedächern, Beschattungsrollos und Laderaumabdeckungen von Kraftfahrzeugen eingesetzt. Die Steigungskabel sind beispielsweise mittels einer motorangetriebenen Schnecke axial verstellbar und an einem zu verstellenden Bauteil, beispielsweise an dem Schiebedach, über Mitnehmer gekoppelt, d.h. die Mitnehmer sorgen hier auch für die Kraftübertragung. Die Steigungskabel werden meist aus mehreren Litzen bestehenden Metallseilen mit aufgebrachten Steigungswendeln als Endlosware hergestellt und müssen anschließend auf die benötigte Länge abgelängt werden. Das Schiebedach wird dabei an beiden Seiten mit je einem Mitnehmer eines Steigungskabels gekoppelt. Es sind auch konstruktive Ausgestaltungen bekannt, bei denen zwei Steigungskabel um den Dachausschnitt des Schiebedaches herum zu einem gemeinsamen Antrieb verlaufen, an dem sie mit einem Zahnrad in Eingriff stehen, das in die Windungsabstände des Steigungskabels eingreift und diese wie eine Zahnstange betätigt.

Die DE 7306 032 U offenbart einen Fensterheber für Kraftfahrzeuge, bei dem mittels eines kurbelbetätigten Zahnrades ein Steigungskabel in einem längsgeschlitzten Führungsrohr mindestens teilweise parallel zur Bewegungsrichtung des Fensters verschoben wird. Auf dem Steigungskabel ist ein Mitnehmer befestigt. Der Mitnehmer kann aus Kunststoff gefertigt sein und als getrenntes, mit einem Innengewinde versehenes Teil, das nachträglich auf das eine Ende des Steigungskabels aufgeschraubt wird, oder als direkt auf das Steigungskabel aufgespritztes Teil ausgebildet sein.

Aus dem Stand der Technik sind auch Mitnehmer an Steigungskabeln der eingangs genannten Art bekannt, die als gegossener Metallguss ausgebildet sind. In der DE 10 2010 008 365 B4 wird ein Steigungskabel beschrieben, an dem an seinem einen Ende ein Mitnehmer befestigt ist, der zur Koppelung an ein in Achsrichtung des Steigungskabels bewegbares Schiebelement ausgebildet ist. Hierzu ist der Mitnehmer als um den Endbereich des Steigungskabels gegossener
Metallgusskörper ausgebildet und weist eine zur Koppelung ausgebildete seitliche Ausnehmung auf, die in Achsrichtung jenseits des Endes des
Steigungskabels angeordnet ist. Bei diesem bekannten Steigungskabel ist in dem neben der Ausnehmung verbleibenden Querschnitt des Mitnehmers zudem ein achsparalleler Stift eingegossen.

Auch sind im Stand der Technik Mitnehmer für Steigungskabel bekannt, die aus Kunststoff bestehen und im Spritzgussverfahren um den Endbereich des Steigungskabels gegossen werden.

In der DE 36 07 724 C1 erfolgt die Kopplung zwischen einem Schiebedach und dem Steigungskabel über ein Kunststoffteil Dabei ist ein Druckgussträger vorgesehen, der mit Teilen eines Schlittenkörpers einteilig verbunden ist. Der Druckgussträger kann an einem als Blechbiegeteil ausgebildeten Stahlausleger angebracht sein, der mindestens einen Steg und einen Schenkel des Schlittenkörpers bildet. Der Schenkel kann gleichfalls Bestandteil des Blechbiegeteils sein. Bevorzugt wird dort jedoch der Schenkel von einem mit einem Stahlausleger verbundenen Kunststoffteil gebildet, das eine einfache und wirkungsvolle Verankerung mit dem Steigungskabel durch Aufschmelzen mittels Ultraschall zulässt. Zur festen Verbindung eines Führungsschlittens mit dem Steigungskabel kann bevorzugt das Kunststoffteil in seinem das Steigungskabel umgreifenden Bereich mittels Ultraschallbeaufschlagung derart aufgeweicht werden, dass Material des Kunststoffteils in Zwischenräume des beispielsweise aus verdrillten Einzeldrähten bestehenden Antriebskabels eindringt.

Die DE 30 15 965 A1 beschreibt eine Zusammenbau-Führung für die Bewegung eines Schiebedaches. Die Zusammenbau-Führung besteht aus einem Bedienungskabel mit einer Seele aus Stahldraht und einem Führungskörper aus Kunststoff, an den eine Hülse angeformt ist, in der eine Seele befestigt ist. Die Seele ist dabei mit der Hülse zug-und drehfest verschweißt.

Die FR 2 482 905 A1 offenbart eine Fensterkurbelvorrichtung zur geregelten Verstellung von bewegbaren Kraftfahrzeugscheiben, mit einer an einem Randabschnitt einer Fensterscheibe anbringbaren Platte sowie mit wenigstens einer mit der Platte verschiebbar verbundenen, parallel zur Verlagerungsrichtung der Fensterscheibe angeordneten Führung und mit einem mit der Platte über Befestigungselemente verbundenen biegsamen, die Platte entlang der Führung verlagernden Stellantrieb. Der Stellantrieb ist von einer biegsamen Schraubspindel gebildet ist, die aus einem biegsamen Metallkern und einer äußeren Hülle besteht. Die biegsame Schraubspindel verläuft entlang eines Führungsrohres und greift in ein in einer zylindrischen Büchse ausgebildetes Gewinde ein, sodass eine feste und starre Verbindung mit der Platte hergestellt wird.

Die US 3 444 701 A offenbart eine Montageklammer mit einem Bowden-Zug. Der Bowden-Zug besteht wiederum aus einem inneren Draht, der durch ein äußeres Teil geführt ist. Um das äußere Teil ist eine Hülle geformt, sodass eine feste Verbindung zwischen dem äußeren Teil und der Hülle besteht.

Die US 4 570 893 A beschreibt einen Mechanismus, um die Position eines Außenspiegels eines Kraftfahrzeugs einzustellen. Hierzu sind in der Spiegelvorrichtung innerhalb einer Wand Mutterelemente vorgesehen, in denen Federteile verlaufen. Die Mutterelemente und die Federteile weisen korrespondierende helikale Formen auf. Bei einer Bewegung, d.h. einer Rotation der Federteile können sich die Federteile durch die Mutterelemente bewegen.

Aus der WO 2012/084082 A1 geht ein Steigungskabel gemäß dem Oberbegriff des Anspruchs 1 hervor, das einen Kern aufweist, der aus verdrehten Drähten besteht. Der Kern ist fest mit einer Wendel umwickelt, die hohe Kräfte in Achsrichtung des Kernes aufnehmen soll. Der Kern weist einen Endbereich auf, der eine Bohrung in einem Bohrungsteil des Mitnehmers durchläuft. Am Ende des Kernes ist ein Anschlagkörper befestigt. Der Anschlagkörper aus verformbarem Metall ist mit einem Schlag an der Kerbe auf dem Kern festgesetzt. Er liegt mit einer Fläche gegen das Ende des Bohrungsteiles, während das andere Ende des Bohrungsteiles gegen das Ende der Wendel liegt.

Die DE 26 59 268 A1 offenbart einen Endabschluss eines Zug und Druckkräfte übertragenden Kabels in Form einer Hülse, die auf das Kabel in axialer Richtung aufgeschraubt ist. Durch die Überwurfmutter in der DE 26 59 268 A1 soll eine technisch einfache Sicherung des Endabschlusses bereitgestellt werden. Die Hülse ist dabei kein Teil, das bei seiner Bewegung ein anderes Teil ebenfalls in Bewegung setzt, d.h. der Kraftübertragung dient. Die Hülse in der DE 26 59 268 A1 ist zur Befestigung des Kabelendes an einem elektrischen Hauptschalter eines Fahrzeugs vorgesehen.

Die DE 29 12 666 A1 offenbart eine Verbindungseinrichtung zwischen einem Antriebskabel und einem Gleitfuß, der verschiebbar in einer ersten Führungsnut eines feststehenden Teils sitzt und einen Ansatz aufweist, wobei das Antriebskabel auf seiner Oberfläche verzahnt und mittels einer Antriebseinrichtung in Axialrichtung verschiebbar ist. Das Antriebskabel ist in den Ansatz beim Formen des Gleitfußes aus Kunststoff eingeformt, so dass das Antriebskabel und der Ansatz einstückig miteinander verbunden sind.

Die DE 24 18 110 A offenbart einen Bowdenzug, bestehend aus einer langgestreckten flexiblen Seele mit einem Kern und einem wendelförmig gewickelten Draht um den Kern herum mit im Abstand liegenden Windungen, wobei ein Anschlußstück aus einem polymeren Material in einer Anordnung um die Seele herum zum Umschließen des Wendeldrahts und des Kerns in den Bereichen zwischen aufeinanderfolgenden Windungen des Wendeldrahts vorgesehen ist. Das Anschlußstück ist dabei so geformt, dass es um die Seele herum angeordnet ist und die Wendeldrähte und den Kern in den Bereichen zwischen aufeinanderfolgenden Windungen des Wendeldrahts umbettet.

Die DE 10 2010 015 130 A1 offenbart einen Spiralkabelantrieb einer beweglichen Einrichtung eines Kraftfahrzeugs mit wenigstens einem mehrere Windungen aufweisenden Spiralkabel, welches zur Bewegung der Einrichtung über eine mechanische Wirkverbindung mit einer Antriebseinrichtung verbunden ist, wobei eine Antriebswandlereinrichtung eine rotatorische Antriebsbewegung der Antriebseinrichtung in eine translatorische Bewegung des Spiralkabels wandelt und wobei die Antriebswandlereinrichtung wenigstens eine die rotatorische Antriebsbewegung aufnehmende Spindelmutter aufweist, welche das Spiralkabel im Bereich wenigstens einer Windung umgreift. Bei einer Drehung der Spiralmutter gegenüber dem Spiralkabel entsteht eine durch eine Steigung der Windungen des Spiralkabels bedingte translatorische Bewegung des Spiralkabels gegenüber der Spindelmutter, welche bereits durch geringe Kräfte von der Spindelmutter auf das Spiralkabel übertragen soll. Da die Spindelmutter über einen ersten Absatz und einen zweiten Absatz in dem Gehäuse des Spiralkabelantriebs festgelegt ist, soll aus einer Drehung der Spindelmutter eine translatorische Bewegung des Spiralkabels gegenüber der Spindelmutter in dem Führungsrohr resultieren, welches ortsfest an die Außenhaut des Kraftfahrzeugs angebunden ist.

Aus der DE 10 2012 110 257 A1 ist ein Antriebskabel mit ultraschallgeschweißter Abschlusskappe sowie ein Verfahren zur Herstellung eines solchen Antriebskabels bekannt. Das Antriebskabel besteht aus zu einer Litze gefertigten Metalldrähten. Vor dem Aufsetzen und Verbinden der Abschlusskappe mit dem Antriebskabel wird das Antriebskabelende im Endbereich konisch angeschliffen. Auf diesen Endbereich wird die Abschlusskappe aufgesetzt und mittels Ultraschallschweißen an dem Antriebskabel befestigt.

Nachteilig ist-bei den aus dem Stand der Technik bekannten Steigungskabeln vor allem, dass für jedes herzustellende Steigungskabel der Mitnehmer im Spritzgussverfahren um den Endbereich des Steigungskabels gegossen wird, was vor dem Hintergrund einer notwendigen kostengünstigen Massenfertigung von Steigungskabeln einen nicht unerheblichen Aufwand darstellt.

Weiterhin ist es nachteilig, dass die Montage des Mitnehmers manuell erfolgt.

Davon ausgehend ist es Aufgabe der vorliegenden Erfindung, diese Nachteile zu vermeiden.

Diese Aufgabe wird mit den Merkmalen des Anspruchs 1 und des Anspruchs 6 gelöst. Vorteilhafte Weiterbildungen der Erfindung ergeben sich aus den Unteransprüchen.

Die Erfindung sieht vor, dass der Mitnehmer an dem Steigungskabel in Form einer Verklebung und/oder Verschmelzung und/oder Verschweißung fixiert ist.

Durch diese konstruktive Ausgestaltung des Mitnehmers ist gewährleistet, dass der Mitnehmer zunächst separat von dem Steigungskabel ausgebildet bzw. produziert werden kann, da aufgrund der Steigungswendel des Steigungskabels und des hierzu korrespondierenden Innengewindes des Mitnehmers ein Aufschrauben des Mitnehmers auf das Ende des Steigungskabels möglich ist. Erst nach diesem Prozess erfolgt die eigentliche Fixierung des Mitnehmers. Der Mitnehmer wird vorzugsweise als freifallendes Kunststoffspritzgießteil, d.h. maschinell im Rahmen einer Massenfertigung produziert. Diese Fixierung erfolgt vorzugsweise in Form einer Ultraschallschweißung, Klebung, bzw. Anschmelzung.
Vorzugsweise ist das Steigungskabel an seinem zweiten Ende mit einer Abschlusshülse versehen, die eine Bohrung aufweist, deren Geometrie bzw. Innengeometrie verschieden zur Bohrung des Mitnehmers ist.
Es kann auch vorgesehen sein, dass das Ende des Steigungskabels vor dem Verbinden mit der Abschlusshülse so bearbeitet wird, dass das Ende an die dazu korrespondierende Aufnahme der Abschlusshülse wenigstens teilweise angepasst wird.

Im Rahmen der Erfindung liegt auch ein Verfahren zur Herstellung eines Steigungskabels, insbesondere für die Betätigung von Schiebedächern oder Laderaumabdeckungen von Fahrzeugen gemäß Anspruch 6.

Die Fixierung des Mitnehmers oder der Anschlusshülse erfolgt dabei bevorzugt durch Kleben und/oder Verschmelzen und/oder Verschweißen.
Eine weitere vorteilhafte Ausgestaltung der Erfindung sieht vor, dass der Mitnehmer durch Erhitzung, vorzugsweise durch induktive Erhitzung, fixiert wird. Vorzugsweise wird der Mitnehmer, der zweckmäßigerweise aus Kunststoff ist, nach der Erhitzung gepresst. Hierzu kann der Mitnehmer zunächst kalt auf einen Abschnitt des Steigungskabels geschraubt bzw. gedreht werden, um den Mitnehmer dann induktiv zu erhitzen. Nach diesem Schritt wird der Mitnehmer mittels eines Presswerkzeugs oder einer Pressvorrichtung im Zehntelmillimeterbereich gegen das Steigungskabel gepresst. Hierdurch wird vorteilhafterweise eine Verdrehsicherung zwischen Mitnehmer und Steigungskabel erreicht.
Das Fügen des Mitnehmers und/oder der Abschlusshülse am Steigungskabel kann dabei rotatorisch (schraubend) erfolgen.
Das erfindungsgemäße Verfahren kann vorteilhafterweise komplett automatisiert durchgeführt werden. Das erfindungsgemäße Steigungskabel und das erfindungsgemäße Verfahren zur Herstellung des Steigungskabels bietet eine Reihe weiterer Vorteile:
- Bei der Herstellung der Steigungskabel kann eine nicht unerhebliche Kostenersparnis erzielt werden, da die Herstellung des Steigungskabels weitestgehend oder komplett automatisch erfolgen kann;
- zum Teil können Entgratungs-Nacharbeiten entfallen;
- es entstehen wesentlich geringere Werkzeugwartungs- und Werkzeuginstandhaltungskosten;
- der Bauteilverzug des Mitnehmers, insbesondere im Bereich der Kabelachse, wird deutlich verbessert bzw. vermieden;
- es kann eine gleichmäßigere Bauteilqualität durch kontinuierliche Fertigungszyklen erreicht werden;
- es ist eine durchgängige Prozessüberwachung und Datenarchivierung möglich;
- es treten keine oder nur geringe Verschmutzungen auf, sodass auf Reinigungen bei der Fertigung weitestgehend verzichtet werden kann.

Hierzu ist im Rahmen einer vorteilhaften Weiterbildung der Erfindung auch vorgesehen, dass der Mitnehmer als Kunststoffspritzgießteil ausgebildet ist.

Erfindungsgemäß wird das Innengwinde als Abguss ausgebildet. Hierdurch wird vorteilhafterweise erreicht, dass der Kunststoffmitnehmer mannlos und kostengünstig hergestellt werden kann.

Eine praktikable Variante der Erfindung sieht vor, dass das Steigungskabel außerhalb des Mitnehmers zwischen den Windungen der Steigungswendel mit Flockfäden versehen ist. Die Beflockung erfolgt zweckmäßigerweise durch Einwickeln oder Anschmelzen von Flockgarnfäden, welche beispielsweise aus Polyamid bestehen und der Geräuschbekämpfung bei Bewegung des Steigungskabels dienen. Derartige Flockengarnfäden für Steigungskabel sind beispielsweise aus der WO 2009/030376 A1, DE 10 2007 041 233 A1 oder DE 36 14 241 A1 bekannt.

Diese Fixierung erfolgt vorzugsweise in Form einer Ultraschallschweißung, Klebung, bzw. Anschmelzung.

In einer bevorzugten Ausgestaltung der Erfindung ist der Mitnehmer als Metall-Kunststoff Bauteil mit einem umspritzten Blecheinleger ausgebildet, wodurch die Stabilität des Mitnehmers weiter erhöht wird.

Eine weitere vorteilhafte Ausgestaltung der Erfindung sieht vor, dass an seinem zweiten Ende das Steigungskabel mit einer Abschlusshülse versehen ist. Eine derartige Abschlusshülse ist in der DE 10 2008 005 983 A1 beschrieben. Die abgelängten Steigungskabel neigen aufgrund der losen Einzeldrähte des Kabels zum Aufspleißen. Ein weiteres Problem der bekannten Steigungskabel ist es, dass sie in montiertem Zustand an den Enden zum Klappern neigen. Die vorgesehene Abschlusshülse vermeidet diese Nachteile. Vorzugsweise weist die Abschlusshülse eine Bohrung auf, deren Wandung wiederum eine zu der Steigungswendel korrespondierende Form aufweist.

Die Befestigung bzw. Fixierung der Abschlusshülse an dem Steigungskabelende erfolgt automatisch, beispielsweise durch Ultraschallschweißung, Klebung, oder Anschmelzung,

Ein nicht erfindungsgemäßes Verfahren zur Herstellung des Steigungskabels mit der Abschlusshülse kann die folgenden Verfahrensschritte aufweisen:
a) Herstellung eines mit einer Steigungswendel versehenen Steigungskabels sowie Herstellung einer mit einer Bohrung versehenen Abschlusshülse, wobei innerhalb der Bohrung eine zu der Steigungswendel korrespondierende Form ausgebildet wird;
b) automatisiertes Fügen der Abschlusshülse auf einen Abschnitt, insbesondere auf ein Ende des Steigungskabels oder automatisiertes Fügen des Steigungskabels in die Bohrung der Abschlusshülse;
c) Fixierung der Abschlusshülse an einem Abschnitt, insbesondere dem Ende des Steigungskabels.

In einer bevorzugten Variante wird der Bereich des Steigungskabels, an dem die Fixierung des Mitnehmers oder der Abschlusshülse erfolgen soll, vor der Montage von Mitnehmer und/oder Abschlusshülse induktiv erhitzt. Alternativ kann das Erhitzen des Steigungskabels auch nach der Montage des Mitnehmers erfolgen. Beim Fügen von Steigungskabel und Mitnehmer und/oder Abschlusshülse kommt es dann in diesem Bereich zu einer Verschmelzung oder Anschmelzung oder Verschweißung.

Für die Fixierung des Mitnehmers wird dabei nur ein Teilbereich des einzuschraubenden Abschnitts des Steigungskabels erhitzt. Hierdurch wird vermieden, dass sich der Mitnehmer übermäßig verformt. Eine unerwünschte oder übermäßige Verformung des Mitnehmers kann auftreten, falls die gesamte Einschraublänge des Steigungskabels erhitzt wird.

Wenn beispielsweise eine Einschraubtiefe von 30 mm vorgesehen ist, wird vor der Montage des Mitnehmers mit dem Steigungskabel nur der Bereich von z.B. 20 mm bis 30 mm, ausgehend von einem Ende des Steigungskabels, induktiv erhitzt, d. h., dass in dieser bevorzugten Variante der Endbereich des Steigungskabels, z.B. 20 mm am Ende des Steigungskabels nicht erhitzt wird, sondern es werden nur z.B. 10 mm erhitzt, die im Bereich von 20 mm bis 30 mm von einem Ende des Steigungskabels beabstandet sind. Eine Verformung des Mitnehmers wird hierdurch also vorteilhafterweise vermieden.

Die Anschmelzung oder die Verschmelzung von Steigungskabel und Mitnehmer und/ oder Abschlusshülse dient dabei der Fixierung des Mitnehmers und/oder der Abschlusshülse an dem Steigungskabel.

Die Verbindungsfestigkeit bzw. die Abzugsfestigkeit zwischen Steigungskabel und Mitnehmer wird durch die Schraubverbindung zwischen Steigungskabel und Mitnehmer erreicht.

Eine praktikable Variante der Erfindung sieht vor, dass die Fixierung der Abschlusshülse an dem Steigungskabel erfolgt.

Dabei kann vorgesehen sein, dass das Ende des Steigungskabels vor dem Verbinden mit der Abschlusshülse so bearbeitet wird, dass das Ende, der Endbereich bzw. die Spitze des Steigungskabels für eine Verbindung mit der Abschlusshülse angepasst wird. Beispielsweise kann die Form des Endes des Steigungskabels wenigstens teilweise an die dazu korrespondierende Aufnahme in der Abschlusshülse angepasst werden.

Beispielsweise wird zur Fixierung lediglich der Endbereich bzw. die Spitze des Steigungskabels, welche bevorzugt konisch angeschliffen ist, z.B. in einem Winkel zwischen Achse und Außenwandung des Kabels von 10° bis 30° bevorzugt 15°, induktiv erhitzt.

Bevorzugt weist die Abschlusshülse eine Bohrung mit einer kohärent ausgebildeten Form auf.

Auf den so vorbereiteten Endbereich des Steigungskabels wird eine bevorzugt aus Kunststoff bestehende Abschlusshülse montiert, so dass eine Fixierung durch Anschmelzung der Abschlusshülse auf dem Kabelende erfolgen kann.

Gemäß einer weiteren vorteilhaften Ausgestaltung der Erfindung kann zur Erhöhung der Verbindungsfestigkeit an dem Ende des Steigungskabels eine Verrippung oder eine Rändelung angebracht sein.

Weitere Ziele, Vorteile, Merkmale und Anwendungsmöglichkeiten der vorliegenden Erfindung ergeben sich aus der nachfolgenden Beschreibung von Ausführungsbeispielen anhand der Figur. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt in schematischer Darstellung:
- Fig. 1: in einer perspektivischen Ansicht ein Steigungskabel gemäß der Erfindung;
- Fig. 2: in einer perspektivischen Ansicht den erfindungsgemäßen Mitnehmer des Steigungskabels aus Figur 1;
- Fig. 3: in einer perspektivischen Ansicht den Ablauf des erfindungsgemäßen Verfahrens;
- Fig. 4: in einer perspektivischen Ansicht ein abgelängtes Steigungskabel
- Fig. 5: in einer perspektivischen Ansicht ein weiterer Schritt im Rahmen des erfindungsgemäßen Verfahrens und
- Fig. 6: in einer perspektivischen Ansicht ein weiterer Schritt im Rahmen des erfindungsgemäßen Verfahrens.

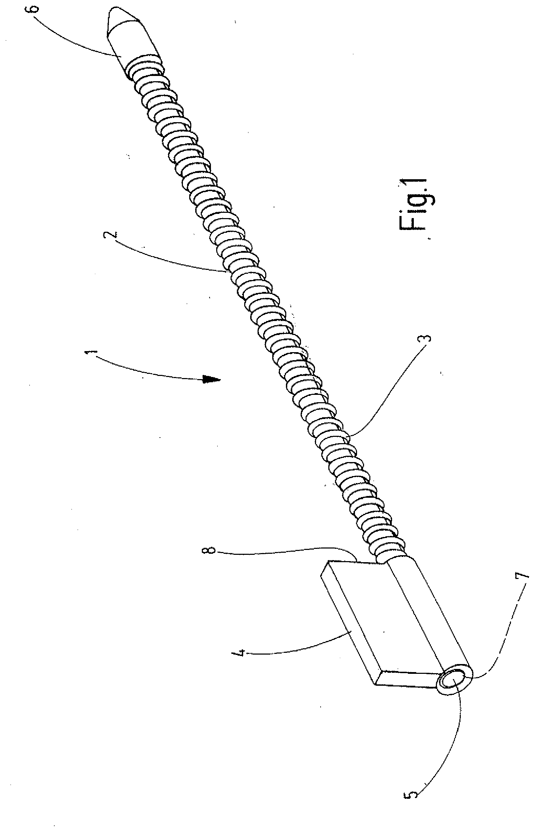

Fig. 1 zeigt ein Steigungskabel, das mit dem Bezugszeichen 1 versehen ist.

Das Steigungskabel 1 weist einen Kern 2 auf, der bei dem hier gewählten Ausführungsbeispiel aus mehrlagig gegenläufig übereinander gewickelten Drähten gebildet ist, welche aus Metall oder Kunststoff bestehen.

Wie aus Figur 1 zudem hervorgeht, ist auf den Kern 2 eine Steigungswendel 3 aus Draht aufgewickelt.

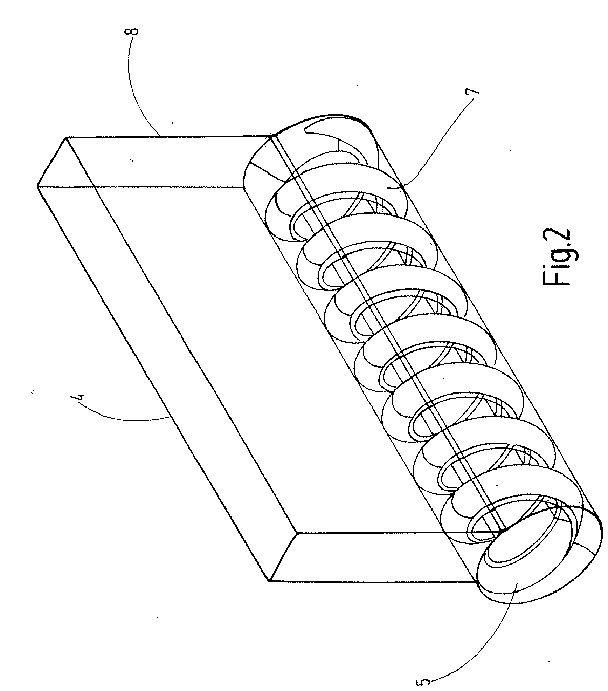

Das Steigungskabel 1 ist, wie Figur 1 weiter verdeutlicht, mit einem an seinem einen Ende angeordneten Mitnehmer 4 versehen. Der Mitnehmer 4 ist auf dem Steigungskabel 1 fixiert und weist eine Bohrung 5 auf, in der ein zu der Steigungswendel 3 korrespondierender in Figur 2 gezeigter Innenabschnitt 7 in Form eines Innengewindes ausgebildet ist. Der Innenabschnitt 7 stellt gleichzeitig die Wandung der Bohrung 5 dar.

Figur 1 zeigt weiterhin, dass das Steigungskabel 1 an seinem zweiten Ende mit einer Abschlusshülse 6 versehen ist, die den Abschluss des Steigungskabels 1 bildet und an dem das Steigungskabel 1 befestigt ist. Die Abschlusshülse 6 ist dabei automatisiert auf das Steigungskabel 1 aufgebracht worden.

Der in Figur 2 gezeigte Mitnehmer 4 ist mit einem Flächenelement 8, das, abstehend von dem Mitnehmer 4, für die Kopplung mit einem beweglichen Schiebeelement, wie beispielsweise einem Schiebedach eines Kraftfahrzeugs, vorgesehen ist. Der Mitnehmer 4 weist, wie Figur 2 weiter verdeutlicht, den Innenabschnitt 7 in Form eines Innengewindes auf, das als Abguss ausgebildet ist. Zudem ist der Mitnehmer 4 als Kunststoffspritzgießteil getrennt von dem in Figur 1 gezeigten Steigungskabel 1 geformt, d.h. der in Figur 1 gezeigte Mitnehmer 4 ist zunächst nicht integraler Bestandteil des Steigungskabels 1 und von dem Steigungskabel 1 getrennt.

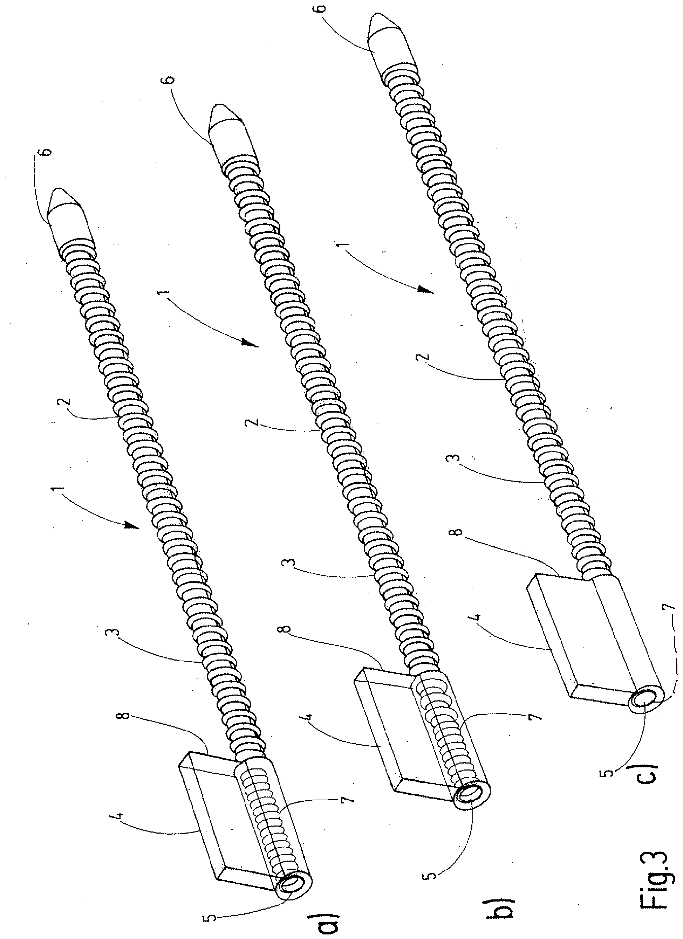

Die Verbindung und Vereinigung von Steigungskabel 1 und Mitnehmer 4 erfolgt im Rahmen des erfindungsgemäßen Verfahrens, dessen Ablauf die Figuren 3a bis 3c verdeutlichen.

Das Verfahren beginnt mit der Herstellung eines mit einer Steigungswendel 3 versehenen Steigungskabels 1 sowie mit der Herstellung eines mit einer Bohrung 5 versehenen Mitnehmers 4, wobei innerhalb der Bohrung 5 ein zu der Steigungswendel 3 korrespondierender Innenabschnitt 7 in Form eines Innengewindes ausgebildet wird.

Wie aus Figur 3a hervorgeht, ist der Mitnehmer 4 zunächst nicht integraler Bestandteil des Steigungskabels 1 und von diesem getrennt. Der in Figur 3a dargestellte Mitnehmer 4 wird als freifallendes Kunststoffspritzgießteil hergestellt.

In einem weiteren Schritt wird, wie Figur 3b verdeutlicht, das Steigungskabel 1 in den Mitnehmer 4 eingeschraubt. Hierzu dienen die Steigungswendel 3 und der zu der Steigungswendel 3 korrespondierende Innenabschnitt 7 des Mitnehmers 4, der in Form des Innengewindes vorliegt.

Schließlich erfolgt im Rahmen eines weiteren Verfahrensschrittes, der in Figur 3c dargestellt ist, die Fixierung des Mitnehmers 4 an einem Abschnitt des Steigungskabels, der in Figur 3c ein Ende des Steigungskabels 1 ist. Diese Fixierung erfolgt in Form einer Ultraschallschweißung, Klebung, Anschmelzung oder Verschweißung.

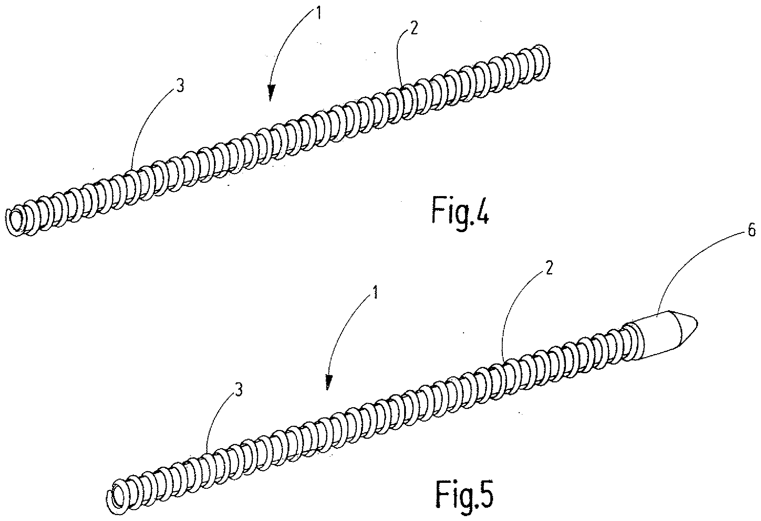

In das erfindungsgemäße Verfahren sind weitere Schritte integriert. Figur 4 zeigt, dass bei der Herstellung des Steigungskabels 1, und zwar ausgehend von einem endlosen Steigungskabel, dieses zunächst, d.h. vor Aufbringung und Fixierung des in den Figuren 3a bis 3c gezeigten Mitnehmers 4, abgelängt wird. Nachdem das Steigungskabel abgelängt worden ist, kann, wie Figur 5 verdeutlicht, die Abschlusshülse auf ein Ende des Steigungskabel 1 automatisch aufgebracht werden.

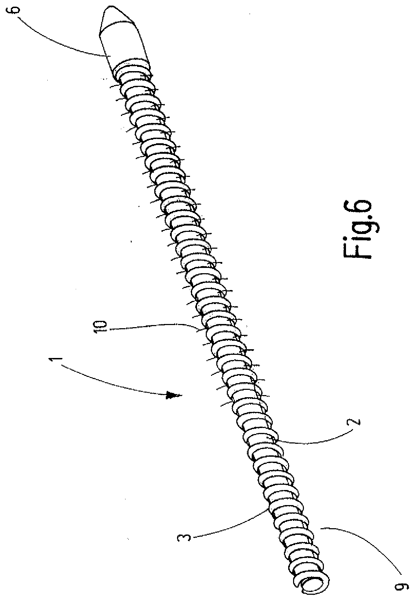

Wie Fig. 6 zeigt, ist das Steigungskabel 1 außerhalb des Mitnehmers 5 zwischen den Windungen der Steigungswendel 3 von Flockgarnfäden 10 eingewickelt, was der Geräuschvermeidung bei Bewegung des Steigungskabels 1 dient. In dem Bereich 9, auf den der Mitnehmer 4 aufgebracht wird, werden die Flockfäden 10 entfernt.

Die vorliegende Erfindung beschränkt sich in ihrer Ausführung nicht auf das vorstehend angegebene bevorzugte Ausführungsbeispiel, sondern auf die vorliegenden Ansprüche. Vielmehr ist eine Anzahl von Varianten - im Rahmen der vorliegenden Ansprüche denkbar, welche von der dargestellten Lösung auch bei anders gearteten Ausführungen Gebrauch machen.

### Bezugszeichenliste

- 1: Steigungskabel
- 2: Kern
- 3: Steigungswendel
- 4: Mitnehmer
- 5: Bohrung
- 6: Abschlusshülse
- 7: Innenabschnitt
- 8: Flächenelement
- 9: Mitnehmerbereich
- 10: Fäden

## Patentansprüche

1. Steigungskabel (1) mit einer auf einem Kern (2) des Kabels (1) aufgebrachten Steigungswendel (3) und mit einem an einem Abschnitt des Steigungskabels (1), insbesondere an einem Ende des Steigungskabels (1), angeordneten Mitnehmer (4) zur Kraftübertragung, beispielsweise auf Schiebedächer oder Laderaumabdeckungen von Fahrzeugen, wobei der Mitnehmer (4) eine Bohrung (5) aufweist, in der ein zu der Steigungswendel (3) korrespondierendes Innengewinde (7) ausgebildet ist, **dadurch gekennzeichnet, dass** das Innengewinde (7) als Abguss von Kunststoff zum Aufschrauben des Mitnehmers (4) auf das Ende des Steigungskabels (1) ausgebildet ist, wobei der Mitnehmer (4) an dem Steigungskabel (1) in Form einer Verklebung und/oder Verschmelzung und /oder Verschweißung fixiert ist.

2. Steigungskabel nach Anspruch 1, **dadurch gekennzeichnet, dass** der Mitnehmer (4) als Kunststoffspritzgießteil ausgebildet ist.

3. Steigungskabel nach einem der vorhergehenden Ansprüche, **dadurch gekennzeichnet, dass** es an seinem zweiten Ende mit einer Abschlusshülse (6) versehen ist.

4. Steigungskabel nach Anspruch 3, **dadurch gekennzeichnet, dass** die Abschlusshülse (6) eine Bohrung aufweist, deren Wandung eine zu dem Ende des Steigungskabels (3) korrespondierende Form aufweist.

5. Steigungskabel nach Anspruch 3 oder 4, **dadurch gekennzeichnet, dass** das Ende des Steigungskabels vor dem Verbinden mit der Abschlusshülse bearbeitet wird.

6. Verfahren zur Herstellung eines Steigungskabels (1), insbesondere für die Betätigung von Schiebedächern oder Laderaumabdeckungen von Fahrzeugen an dem an einem Ende des Steigungskabels (1), ein Mitnehmer (4) zur Kraftübertragung, beispielsweise auf Schiebedächern oder Laderaumabdeckungen von Fahrzeugen befestigt wird, umfassend folgende Verfahrensschritte:
a) Herstellung eines mit einer Steigungswendel (3) versehenen Steigungskabels (1) sowie Herstellung eines mit einer Bohrung (5) versehenen Mitnehmers (4), wobei innerhalb der Bohrung (5) ein zu der Steigungswendel (3) korrespondierendes Innengewinde (7), als Abguss von Kunststoff zum Aufschrauben des Mitnehmers (4) auf das Ende des Steigungskabels (1) ausgebildet wird;
b) automatisiertes Fügen, das Schrauben ist, des Mitnehmers (4) auf das Ende des Steigungskabels (1) oder automatisiertes Fügen, das Schrauben ist, des Steigungskabels (1) in die Bohrung (5) des Mitnehmers; und
c) Fixierung des Mitnehmers (4) an dem Ende des Steigungskabels (1).

7. Verfahren nach Anspruch 6, **dadurch gekennzeichnet, dass** der Mitnehmer (4) durch Kleben und/oder Verschmelzen und /oder Verschweißen fixiert wird.

8. Verfahren nach Anspruch 6, **dadurch gekennzeichnet, dass** der Mitnehmer (4) in Verfahrensschritt c) durch Erhitzung, vorzugsweise durch induktive Erhitzung, fixiert wird.

9. Verfahren nach einem der Ansprüche 6 bis 8, **dadurch gekennzeichnet, dass** der Mitnehmer (4) nach der Fixierung gepresst wird.

10. Verfahren nach einem der Ansprüche 6 bis 9, **dadurch gekennzeichnet, dass** der Mitnehmer (4) im Spritzgießverfahren hergestellt wird.

11. Verfahren nach einem der Ansprüche 6 bis 10, **dadurch gekennzeichnet, dass** an einem zweiten Ende des Steigungskabels (1) eine Abschlusshülse (6) aufgebracht wird.

## Claims

1. Transmission cable (1) having a helical coil (3) applied to a core (2) of the cable (1) and having a carrier (4), arranged on a portion of the transmission cable (1), in particular at one end of the transmission cable (1), for power transmission, for example on sunroofs or loading compartment covers of vehicles, wherein the carrier (4) has a bore (5) in which an internal thread (7) corresponding to the helical coil (3) is formed, **characterized in that** the internal thread (7) is in the form of a plastics casting for screwing the carrier (4) onto the end of the transmission cable (1), wherein the carrier (4) is fixed to the transmission cable (1) by adhesive bonding and/or fusion and/or welding.

2. Transmission cable according to Claim 1, **characterized in that** the carrier (4) is in the form of an injection-moulded plastics part.

3. Transmission cable according to either of the preceding claims, **characterized in that** it is provided at its second end with an end sleeve (6).

4. Transmission cable according to Claim 3, **characterized in that** the end sleeve (6) has a bore, the wall of which has a shape corresponding to the end of the transmission cable (3).

5. Transmission cable according to Claim 3 or 4, **characterized in that** the end of the transmission cable is processed before it is connected to the end sleeve.

6. Method for producing a transmission cable (1), in particular for actuating sunroofs or loading compartment covers of vehicles, to which a carrier (4) for power transmission, for example to sunroofs or loading compartment covers of vehicles, is fastened at one end of the transmission cable (1), comprising the following method steps of:
a) producing a transmission cable (1) provided with a helical coil (3) and producing a carrier (4) provided with a bore (5), wherein an internal thread (7) corresponding to the helical coil (3) is formed within the bore (5) as a plastics casting for screwing the carrier (4) onto the end of the transmission cable (1);
b) automatically joining, by screwing, the carrier (4) onto the end of the transmission cable (1) or automatically joining, by screwing, the transmission cable (1) into the bore (5) of the carrier; and
c) fixing the carrier (4) to the end of the transmission cable (1).

7. Method according to Claim 6, **characterized in that** the carrier (4) is fixed by adhesive bonding and/or fusion and/or welding.

8. Method according to Claim 6, **characterized in that** the carrier (4) is fixed in method step c) by heating, preferably by inductive heating.

9. Method according to one of Claims 6 to 8, **characterized in that** the carrier (4) is pressed after being fixed.

10. Method according to one of Claims 6 to 9, **characterized in that** the carrier (4) is produced by an injection-moulding process.

11. Method according to one of Claims 6 to 10, **characterized in that** an end sleeve (6) is attached to a second end of the transmission cable (1).

## Revendications

1. Câble hélicoïdal (1) comprenant une hélice (3) montée sur une âme (2) du câble (1) et un élément d'entraînement (4) disposé sur une partie du câble hélicoïdal (1), en particulier à une extrémité du câble hélicoïdal (1), pour la transmission de force, par exemple à des toits coulissants ou à des cache-bagages de véhicules, l'élément d'entraînement (4) comprenant un alésage (5) dans lequel est formé un filetage intérieur (7) correspondant à l'hélice (3), **caractérisé en ce que** le filetage intérieur (7) est réalisé en tant que moulage en matière synthétique pour le vissage de l'élément d'entraînement (4) sur l'extrémité du câble hélicoïdal (1), l'élément d'entraînement (4) étant fixé sur le câble hélicoïdal (1) sous la forme d'un collage et/ou d'une fusion et/ou d'un soudage.

2. Câble hélicoïdal selon la revendication 1, **caractérisé en ce que** l'élément d'entraînement (4) est réalisé en tant que pièce moulée par injection de matière synthétique.

3. Câble hélicoïdal selon l'une des revendications précédentes, **caractérisé en ce qu'**il est pourvu d'une douille de terminaison (6) à sa deuxième extrémité.

4. Câble hélicoïdal selon la revendication 3, **caractérisé en ce que** la douille de terminaison (6) comprend un alésage dont la paroi présente une forme correspondant à l'extrémité du câble hélicoïdal (3).

5. Câble hélicoïdal selon la revendication 3 ou 4, **caractérisé en ce que** l'extrémité du câble hélicoïdal est traitée avant la liaison à la douille de terminaison.

6. Procédé de fabrication d'un câble hélicoïdal (1), en particulier pour l'actionnement de toits coulissants ou de cache-bagages de véhicules, sur lequel un élément d'entraînement (4) pour la transmission de force par exemple à des toits coulissants ou à des cache-bagages de véhicules est fixé à une extrémité du câble hélicoïdal (1), le procédé comportant les étapes suivantes :
a) fabrication d'un câble hélicoïdal (1) doté d'une hélice (3) et fabrication d'un élément d'entraînement (4) doté d'un alésage (5), un filetage intérieur (7) correspondant à l'hélice (3) étant réalisé, à l'intérieur de l'alésage (5), en tant que moulage en matière synthétique pour le vissage de l'élément d'entraînement (4) sur l'extrémité du câble hélicoïdal (1) ;
b) assemblage automatisé, c'est-à-dire vissage, de l'élément d'entraînement (4) sur l'extrémité du câble hélicoïdal (1) ou assemblage automatisé, c'est-à-dire vissage, du câble hélicoïdal (1) dans l'alésage (5) de l'élément d'entraînement ; et
c) fixation de l'élément d'entraînement (4) à l'extrémité du câble hélicoïdal (1).

7. Procédé selon la revendication 6, **caractérisé en ce que** l'élément d'entraînement (4) est fixé par collage et/ou fusion et/ou soudage.

8. Procédé selon la revendication 6, **caractérisé en ce que** l'élément d'entraînement (4) est fixé à l'étape c) par chauffage, de préférence par chauffage par induction.

9. Procédé selon l'une des revendications 6 à 8, **caractérisé en ce que** l'élément d'entraînement (4) est pressé après la fixation.

10. Procédé selon l'une des revendications 6 à 9, **caractérisé en ce que** l'élément d'entraînement (4) est fabriqué suivant un procédé de moulage par injection.

11. Procédé selon l'une des revendications 6 à 10, **caractérisé en ce qu'**une douille de terminaison (6) est appliquée sur une deuxième extrémité du câble hélicoïdal (1).
